# EUROPEAN PATENT SPECIFICATION

(11) **EP 2 672 556 B1**
(45) Date of publication and mention of the grant of the patent: **10.05.2017**
(21) Application number: 12742321.8
(22) Date of filing: 31.01.2012
(51) Int. Cl.: H01M 8/1253, C04B 35/486, C04B 35/488, H01M 8/124

(54) **SOLID ELECTROLYTE MATERIAL AND SOLID OXIDE FUEL CELL PROVIDED WITH SAME**
FESTELEKTROLYTMATERIAL UND FESTOXIDBRENNSTOFFZELLE DAMIT
MATÉRIAU D'ÉLECTROLYTE SOLIDE ET PILE À COMBUSTIBLE À OXYDE SOLIDE LA COMPRENANT

(30) Priority: 31.01.2011 JP 2011018760
(43) Date of publication of application: 11.12.2013
(73) Proprietor: Toto Ltd., Fukuoka 802-8601 (JP)
(72) Inventor: SHIMAZU Megumi, Kitakyushu-shi Fukuoka 802-8601 (JP); UENO Akira, Kitakyushu-shi Fukuoka 802-8601 (JP); ABE Toshiya, Kitakyushu-shi Fukuoka 802-8601 (JP); MIYAO Motoyasu, Kitakyushu-shi Fukuoka 802-8601 (JP); HIWATASHI Kenichi, Kitakyushu-shi Fukuoka 802-8601 (JP)
(74) Representative: Witte, Weller & Partner Patentanwälte mbB
(86) International application number: PCT/JP2012/052177
(87) International publication number: WO 2012/105575

(56) References cited:
- EP-A1- 1 930 974
- WO-A1-2008/127601
- DE-A1- 10 212 966
- JP-A- 10 066 916
- JP-A- 2000 340 240
- JP-A- 2002 134 131
- JP-A- 2005 322 547
- JP-A- 2010 027 359
- US-A1- 2005 214 616
- US-A1- 2006 166 070
- FERGUS ET AL: "Electrolytes for solid oxide fuel cells", JOURNAL OF POWER SOURCES, ELSEVIER SA, CH, vol. 162, no. 1, 8 November 2006 (2006-11-08), pages 30-40, XP027938325, ISSN: 0378-7753 [retrieved on 2006-11-08]

## Description

### Technical Field

The present invention relates to a solid electrolyte material and a solid oxide fuel cell comprising the solid electrolyte material.

### Background Art

Conventionally, solid electrolyte materials such as scandia doped zirconia have been used in the applications of solid oxide fuel cells (hereinafter, abbreviated as SOFCs) and the like. SOFCs have higher electric power generation efficiencies and higher discharged thermal energy temperatures than other fuel cells, such as phosphoric acid-type fuel cells and molten carbonate-type fuel cells. Hence, SOFCs have attracted attention as a next-generation type energy-saving electric power generation system.

A basic structure of an SOFC includes a solid electrolyte layer, a fuel electrode layer, and an oxygen electrode layer. When a fuel gas such as hydrogen (H₂) flows through and thereby comes into contact with the fuel electrode layer, which faces one surface of the solid electrolyte layer, and an oxidizing agent gas such as the air or oxygen (O₂) flows through and thereby comes into contact with the oxygen electrode layer, which faces an opposite surface of the solid electrolyte layer, oxygen ions (O²⁻) generated in the oxygen electrode layer move through the solid electrolyte layer to the fuel electrode layer, and the O²⁻ react with H₂ in the fuel electrode layer. An electric output can be obtained by this electrochemical reaction.

A solid electrolyte material for an SOFC based on such a reaction mechanism needs to have the following characteristics: (1) high oxygen ion conductivity; (2) excellent long-term curability; (3) high material strength; and the like. Among zirconia-based solid electrolyte materials, the most preferred material is scandia doped zirconia.

Since scandia doped zirconia has low crystal stability, zirconia is further doped with yttria, ceria, or the like in addition to the scandia to improve the crystal stability are mainly used (see Japanese Patent Application Publication No. 2008-305804).

### Summary of Invention

However, a long-term durability test conducted for several hundred to several thousand hours on the SOFC described in Patent Document 1 has revealed that, when come into contact with the solid electrolyte layer on the fuel electrode layer side, impurities such as Si contained in a fuel gas extract scandia in the crystals, and cause crystal transformation (change from cubic crystals to tetragonal crystals) of the solid electrolyte layer. In addition, it was found that powder formation in a portion of the solid electrolyte layer occurred near the fuel electrode.

In the long-term durability test conducted for several thousand hours, no powder formation was observed in a portion of the solid electrolyte layer covered with the fuel electrode layer, but crystal transformation occurred in this portion as in the portion where the powder formation occurred. Hence, presumably, powder formation will occur during operation for several tens of thousands hours, and peeling (hereinafter, referred to as powder formation peeling) will occur between the solid electrolyte layer and the fuel electrode layer. If the powder formation peeling occurs, electricity cannot be extracted, and electric power generation is impossible. An SOFC is required to have a lifetime of about 40000 hours in the introduction period, and of about 90000 hours in the spread period. The powder formation peeling shown here is a technical problem which should be solved for introduction to the market.

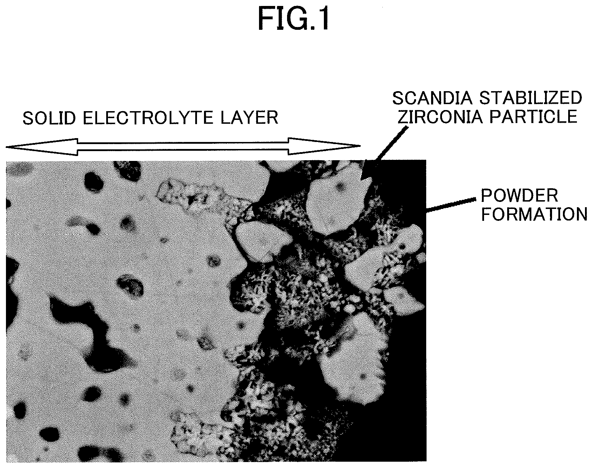

Results of a SEM observation on the powder formation portion showed that particles fell off at grain boundaries, so that the powder formation occurred. This is presumably because the change from the cubic crystals to the tetragonal crystals caused decrease in volume, so that fracture occurred at the grain boundaries (see Fig. 1).

The present inventors provide a solid electrolyte material having an improved strength between particles, in order to suppress the extraction of scandia by impurities such as Si in a fuel gas and to allow no intergranular fracture associated with the crystal transformation, with the high oxygen ion conductivity being maintained.

To solve the above-described problem, a solid electrolyte material according to the present invention is a solid electrolyte material of scandia doped zirconia (hereinafter, referred to as ScSZ) that is doped with a lanthanoid oxide and/or yttria, wherein alumina is further contained, and wherein the zirconia is doped with 9 to 15 mol%, and more preferably 9 to 11 mol% of the scandia, and 3 to 5 mol% of the lanthanoid oxide and/or the yttria relative to the total amount of substances (total molar amount)of the zirconia, the scandia, and the lanthanoid oxide and/or the yttria in the solid electrolyte material. Since alumina is contained in the solid electrolyte material comprising the ScSZ doped with the lanthanoid oxide and/or the yttria, it is possible to suppress the extraction of the stabilizer, scandia, to the outside of the crystals by impurities such as Si contained in a fuel gas and coming into contact with the solid electrolyte layer on the fuel electrode layer side during operation of an SOFC, and it is possible to provide an SOFC having a lifetime of 90000 hours, which is required in the spread period, because no powder formation occurs even when the stabilizer, scandia, is extracted. This is because the ScSZ doped with the lanthanoid oxide and/or the yttria suppresses the extraction of scandia to the outside of the crystals, and the alumina present at grain boundaries of ScSZ particles firmly connects the ScSZ particles to each other, so that the grain boundaries are not fractured even when the volume change associated with the crystal transformation occurs.

Note that the term "a solid electrolyte material comprising ScSZ doped with a lanthanoid oxide and/or an yttria" herein is not limited to solid electrolyte materials prepared by doping zirconia with scandia, and subsequently doping zirconia with a lanthanoid oxide and/or yttria. Regarding the solid electrolyte material of the present invention, when zirconia is doped with scandia and a lanthanoid oxide and/or an yttria, the doping step may be executed any order and a zirconia may be simultaneously doped with the scandia and the lanthanoid oxide and/or the yttria as described in Examples. In other words, the solid electrolyte material according to the present invention is a zirconia solid electrolyte material doped with scandia and a lanthanoid oxide and/or an yttria, and alumina is further contained.

In a further preferred mode of the solid electrolyte material of the present invention, the alumina is contained in an amount of more than 1 mol% relative to the total amount of substance (total molar amount) of the zirconia, the scandia, and the lanthanoid oxide and/or the yttria in the solid electrolyte material. The amount of scandia is preferably 9 to 15 mol%, because an amount of less than 9 mol% may result in the formation of tetragonal crystals, and an amount exceeding 15 mol% may result in the formation of rhombohedral crystals, each of which lowers the oxygen ion conductivity. The lanthanoid oxide and/or the yttria doping is preferably 3 to 5 mol%, because an amount of less than 3 mol% results in a decreased effect of suppressing the extraction of scandia by impurities such as Si contained in a fuel gas, and an amount exceeding 5 mol% increases the possibility of the crystal transformation because of the formation of tetragonal crystals. The alumina is contained in an amount of more than 1 mol%, because an amount of 1 mol% or less results in a decreased effect of suppressing the intergranular fracture due to the volume change associated with the crystal transformation. In addition, the solid electrolyte material of the present invention preferably contains the alumina in an amount of 5 mol% or less. This is because an alumina amount of 5 mol% or less causes no decrease in oxygen ion conductivity of the solid electrolyte material, and even if the decrease is caused, the decrease can be minimized.

In a preferred mode of the solid electrolyte material of the present invention, the lanthanoid oxide is ceria. Ceria is preferable because not only the extraction of scandia by impurities can be suppressed, but also the oxygen ion conductivity of the solid electrolyte material can be improved.

An SOFC can further comprise: a solid electrolyte layer; an oxygen electrode layer provided on one surface of the solid electrolyte layer; and a fuel electrode layer provided on the other surface of the solid electrolyte layer, wherein the solid electrolyte layer is formed of the above-described solid electrolyte material. Since the solid electrolyte layer comprises the solid electrolyte material, it is possible to provide an SOFC having a lifetime of 90000 hours, which is required in the spread period. This is because no powder formation occurs, and no powder formation peeling occurs between the fuel electrode layer and the electrolyte layer, even when the stabilizer, scandia, is extracted to the outside of the crystals by impurities such as Si contained in a fuel gas and coming into contact with the solid electrolyte layer on the fuel electrode layer side during operation of an SOFC. In a further preferred mode, the lanthanoid oxide and/or the yttria doping at the fuel electrode side of the solid electrolyte layer is higher than the lanthanoid oxide and/or the yttria doping at the oxygen electrode side of the solid electrolyte layer. Examples thereof include one in which the lanthanoid oxide doping gradually decreases from the fuel electrode side to the oxygen electrode side, and the like. This makes it possible to minimize the decrease in oxygen ion conductivity of the solid oxide layer as a whole, while preventing the powder formation peeling on the fuel electrode layer side.

In the SOFC, the solid electrolyte layer can comprise two layers of a first layer formed at the oxygen electrode layer side and a second layer formed at the fuel electrode layer side, the lanthanoid oxide and/or the yttria doping in the second layer is higher than the lanthanoid oxide and/or the yttria doping in the first layer, and the amount of the alumina in the second layer is higher than the amount of the alumina in the first layer. More preferably, the first layer is not doped with the lanthanoid oxide and/or the yttria, and the first layer does not contain the alumina. In addition, the first layer may use scandia stabilized zirconia or yttria stabilized zirconia. The SOFC comprising the solid electrolyte layer has a high efficiency, and a lifetime of 90000 hours, which is required in the spread period. This is because of the following reason. Specifically, in the second layer on the fuel electrode layer side, the powder formation peeling can be prevented, but the ion conductivity decreases because of the inclusion of alumina and the like. In contrast, in the first layer on the oxygen electrode layer side, the oxygen ion conductivity remains high, and the internal resistance remains small. Hence, the powder formation peeling can be prevented from occurring, while the decrease in oxygen ion conductivity of the solid electrolyte layer as a whole is minimized.

In the SOFC, the first layer can be thicker than the second layer. The SOFC comprising the solid electrolyte layer has a high efficiency, and a lifetime of 90000 hours, which is required in the spread period. This is because, since the thickness of the second layer is minimum necessary for preventing the powder formation peeling, the contribution of the high oxygen ion conductivity of the first layer is increased, so that the electric power generation efficiency can be further increased. A minimum necessary thickness of the second layer for preventing the powder formation peeling is, for example, 1 µm or more, and preferably 3 µm or more.

The powder formation can be suppressed which is associated with crystal transformation of zirconia caused when impurities such as Si contained in a fuel gas come into contact with the solid electrolyte layer on the fuel electrode layer side during operation of an SOFC, and the powder formation peeling can be suppressed which may occur several tens of thousands hours later between the fuel electrode layer and the solid electrolyte layer. Thus, the present invention makes it possible to provide a solid electrolyte material having a lifetime of about 90000 hours, which is required in the spread period of SOFCs, as well as a solid oxide fuel cell comprising the solid electrolyte material.

According to the present invention, a crystal phase of the solid electrolyte material consists of cubic crystals. Brief Description of Drawings
Fig. 1 is an SEM photograph showing a powder formation phenomenon of a solid electrolyte layer in the prior art.
Fig. 2 is a diagram showing an example of an SOFC of the present invention.
Fig. 3 is a diagram showing the difference in change associated with crystal transformation of a solid electrolyte layer between a conventional case and the present invention.
Fig. 4 is a diagram showing the crystal state of ScSZ depending on the Sc₂O₃ concentration and the temperature.
Fig. 5 is a diagram showing a best mode of the SOFC of the present invention.
Fig. 6 is a diagram showing a testing apparatus for demonstrating effects of the present invention.

### Description of Embodiments

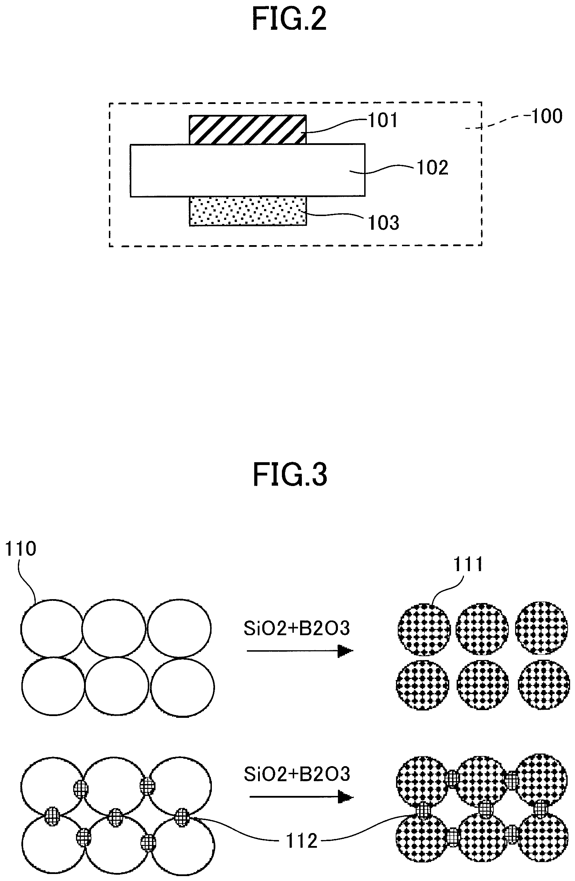

Hereinafter, embodiments of the present invention will be described with reference to the drawings. Fig. 2 is an SOFC of an embodiment of the present invention. An oxygen electrode layer 101 is provided on one surface of a solid electrolyte layer 102, and a fuel electrode layer 103 is provided on the other surface of the solid electrolyte layer 102. Conventionally, a solid electrolyte material comprising ScSZ doped with a lanthanoid oxide and/or yttria has been used as the solid electrolyte layer 102 from the viewpoint of high oxygen ion conductivity. However, a long-term durability test conducted for several hundred to several thousand hours showed that, in an SOFC having a solid electrolyte layer of the above-described composition, scandia in the crystals was extracted when impurities such as Si contained in a fuel gas came into contact with the solid electrolyte layer 102 on the fuel electrode layer side 103, so that crystal transformation (change from cubic crystals to tetragonal crystals) of the solid electrolyte layer 102 occurred. In addition, powder formation was observed in an uncovered portion of the solid electrolyte layer 102. Hence, presumably, the crystal transformation occurred also in a portion of the solid electrolyte layer 102 covered with the fuel electrode layer 103 in the same manner, and the powder formation peeling will occur between the solid electrolyte layer 102 and the fuel electrode layer 103 during operation for several tens of thousands hours.

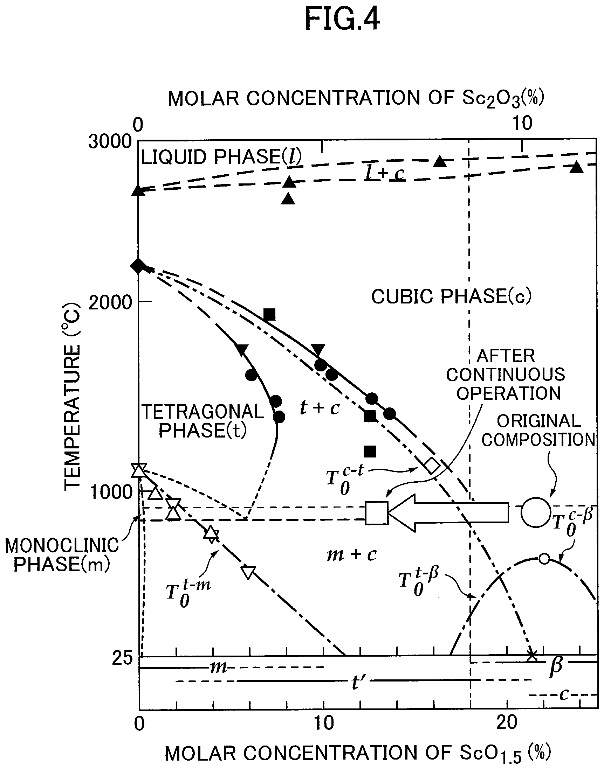

The difference in change associated with the crystal transformation of the solid electrolyte layer 102 between a conventional case and the present invention is described based on Fig. 3. A solid electrolyte layer having a 10Sc1CeSZ composition, which corresponds to that of Comparative Example 1, has a cubic crystal structure 110 at the production thereof. When Si or the like in a fuel gas comes into contact with the solid electrolyte layer, scandia (Sc₂O₃) serving as a stabilizer is extracted from the crystal phase. Consequently, the crystal phase changes from the cubic crystals (c) 110 to tetragonal crystals (t) 111, as shown in the phase diagram of Fig. 4. The change from the cubic crystals (c) 110 to the tetragonal crystals (t) 111 results in decrease in lattice constants and decrease in volume. Presumably as a result of this, intergranular fracture occurs, and the powder formation as shown in the SEM image of Fig. 1 occurs. In the solid electrolyte material of the present invention, it is preferable to prevent the powder formation from occurring as follows. Specifically, a lanthanoid oxide and/or yttria doping is increased in order to suppress the extraction of scandia (S_{C2}O₃) from the crystal phase, and alumina 112 is further contained in order to reinforce the grain boundaries, so that no intergranular fracture will occur even when the crystal transformation occurs due to extraction of scandia from the crystal phase.The composition of the solid electrolyte material is such that the scandia doping is 9 to 15 mol%, and the lanthanoid oxide and/or the yttria doping is 3 to 5 mol%, relative to the total amount of substances (total molar amount) of the zirconia, the scandia, and the lanthanoid oxide and/or the yttria in the solid electrolyte material. A preferred composition of the solid electrolyte material of the present invention is such that more than 1 mol% of alumina is contained relative to the total amount of substances (total molar amount) of the zirconia, the scandia, and the lanthanoid oxide and/or the yttria in the solid electrolyte material. The amount of scandia is 9 to 15 mol%, because an amount of less than 9 mol% may result in the formation of tetragonal crystals, and an amount exceeding 15 mol% may result in the formation of rhombohedral crystals, which lower the oxygen ion conductivity. The lanthanoid oxide and/or the yttria doping is 3 to 5 mol%, because an amount of less than 3 mol% results in a decreased effect of suppressing the extraction of scandia by impurities such as Si contained in a fuel gas, and an amount exceeding 5 mol% increases the possibility of the crystal transformation because of the formation of tetragonal crystals. The alumina is preferably contained in an amount of more than 1 mol%, because an amount of 1 mol% or less results in a decreased effect of suppressing the intergranular fracture due to the volume change associated with the crystal transformation.

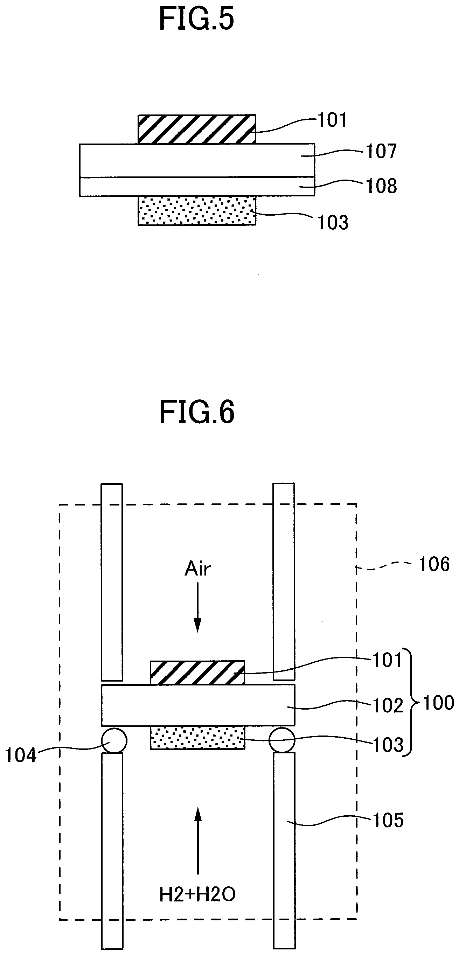

A major object of the solid electrolyte layer of the SOFC of the present invention is to prevent degradation due to impurities such as Si in a fuel gas. From the viewpoints of increasing the efficiency and of a high durability of the SOFC, the solid electrolyte layer preferably comprises two layers of a first layer 107 formed at the oxygen electrode layer 101 side and a second layer 108 formed at the fuel electrode layer side 103, wherein the second layer 108 on the fuel electrode layer 103 side is formed of a solid electrolyte material comprising ScSZ doped with a lanthanoid oxide and/or yttria and having a composition further containing alumina, and the first layer 107 on the oxygen electrode layer 101 side is formed of a solid electrolyte material having a ScSZ composition with a high oxygen ion conductivity (see Fig. 5). From the viewpoint of high efficiency, the first layer is more preferably thicker than the second layer.

The fuel electrode layer 103 in the SOFC of the present invention only needs to satisfy the following requirements: having a high electrical conductivity, which enables an electric output to be obtained by an electrochemical reaction in which O²⁻ react with H_{2;} being chemically stable; and having a coefficient of thermal expansion close to that of the solid electrolyte layer 102. Conventionally used fuel electrode layers can be employed without any particular limitation. Typical examples thereof include a cermet of Ni and ScSZ, a cermet of Ni and yttria stabilized zirconia (hereinafter, referred to as YSZ), and a cermet of Ni and cerium oxide, and the like.

The oxygen electrode layer 101 in the SOFC of the present invention only needs to satisfy the following requirements: having a high electrical conductivity and having a high catalytic activity for converting an oxidizing agent gas such as oxygen (O₂) into oxygen ions (O²⁻) ; being chemically stable; and having a coefficient of thermal expansion close to that of the solid electrolyte layer 102. Conventionally used oxygen electrode layers can be employed without any particular limitation. Examples thereof include strontium doped lanthanum manganite (hereinafter, referred to as LSM), strontium doped lanthanum ferrite (hereinafter, referred to as LSF), and strontium and iron doped lanthanum cobaltite (hereinafter, referred to as LSCF), and the like.

In the production of the solid electrolyte material of the present invention, any method generally employed in this technical field may be used without any particular limitation. For example, the solid electrolyte material of the present invention can be produced as follows, although the method is not limited to this one. Specifically, particles of zirconia, particles of scandia, and particles of the lanthanoid oxide and/or particles of yttria are mixed with each other at a given blending ratio; the mixture is ground in a grinding machine such as a ball mill, and then sintered; the sintered material is ground in a grinding machine such as a ball mill; then the ground material is mixed with alumina and a binder component; and the mixture is molded and sintered.

In the production of the SOFC of the present invention, any method generally employed in this technical field may be used without any particular limitation. For example, the SOFC of the present invention can be produced by forming an oxygen electrode layer on one surface of the solid electrolyte material of the present invention and a fuel electrode layer on the other surface thereof by the screen printing method or the like, followed by sintering.

The SOFC of the present invention may be of any type such as the flat-plate vertical-stripe type, the flat-plate lateral-stripe type, the flat tubular type, the tubular vertical-stripe type, the tubular lateral-stripe type, or the microtube type.

### [Examples]

### (Example 1; not according to the invention)

A test conducted by fabricating a cell of the type shown in Fig. 2 is described. A ZrO₂ raw material (average particle diameter 0.3 µm), a Sc₂O₃ raw material (average particle diameter 0.3 µm), and a CeO₂ raw material (average particle diameter 0.3 µm) were weighed to give a 10Sc1CeSZ composition represented by the general formula of 89 mol% (ZrO₂) -10 mol% (S_{C2}O₃) -1 mol% (CeO₂) . These raw materials were wet blended in an ethanol solvent for 50 hr, and dried and ground. Then, the blend was sintered at 1200°C. The sintered material was ground into a powder. Then, to the powder, Al₂O₃ (average particle diameter: 0.5 µm) was added in an amount equivalent to 1 mol% relative to the total amount of substances (total molar amount) of the zirconia, the scandia, and the lanthanoid oxide and/or the yttria in the solid electrolyte material, and 5 wt% of a binder PVA was added thereto, followed by mixing in a mortar. The powder containing the PVA was press molded at 50 MPa, and sintered at 1450°C for 5 hr. Thus, a dense solid electrolyte layer having a 10Sc1CeSZ1Al composition was obtained. After the layer was polished to a thickness of about 200 µm, a film of LSM (average particle diameter: 2 µm) was formed as an oxygen electrode layer by screen printing so as to give a thickness of 20 µm after sintering, and a film of 40 wt% NiO-60 wt% YSZ (average particle diameter: 2 µm) was formed as a fuel electrode layer on an opposite surface by screen printing so as to form a cermet of Ni and YSZ and to give a thickness of 20 µm after sintering. Then, sintering was carried out at 1400°C for 2 hr.

### (Example 2; not according to the invention)

Example 2 was conducted in the same manner as in Example 1, except that a dense solid electrolyte layer having a 10Sc1CeSZ2Al composition was obtained as follows. Specifically, with a 10Sc1CeSZ composition represented by the general formula of 89 mol% (ZrO₂) -10 mol% (Sc₂O₃) -1 mol% (CeO₂), Al₂O₃ was mixed in an amount equivalent to 2 mol% relative to the total amount of substances (total molar amount) of the zirconia, the scandia, and the lanthanoid oxide and/or the yttria in the solid electrolyte material.

### (Example 3)

Example 3 was conducted in the same manner as in Example 1, except that a dense solid electrolyte layer having a 10Sc3CeSZ2Al composition was obtained as follows. Specifically, with a 10Sc3CeSZ composition represented by the general formula of 87 mol% (ZrO₂) -10 mol% (Sc₂O₃) -3 mol% (CeO₂), Al₂O₃ was mixed in an amount equivalent to 2 mol% relative to the total amount of substances (total molar amount) of the zirconia, the scandia, and the lanthanoid oxide and/or the yttria in the solid electrolyte material.

### (Example 4)

Example 4 was conducted in the same manner as in Example 1, except that a dense solid electrolyte layer having a 10Sc3CeSZ5Al composition was obtained as follows. Specifically, with a 10Sc3CeSZ composition represented by the general formula of 87 mol% (ZrO₂) -10 mol% (Sc₂O₃) -3 mol% (CeO₂), Al₂O₃ was mixed in an amount equivalent to 5 mol% relative to the total amount of substances (total molar amount) of the zirconia, the scandia, and the lanthanoid oxide and/or the yttria in the solid electrolyte material.

### (Example 5)

Example 5 was conducted in the same manner as in Example 1, except that a dense solid electrolyte layer having a 10Sc5CeSZ2Al composition was obtained as follows. Specifically, with a 10Sc5CeSZ composition represented by the general formula of 85 mol% (ZrO₂) -10 mol% (Sc₂O₃) -5 mol% (CeO₂), Al₂O₃ was mixed in an amount equivalent to 2 mol% relative to the total amount of substances (total molar amount) of the zirconia, the scandia, and the lanthanoid oxide and/or the yttria in the solid electrolyte material.

### (Example 6; not according to the invention)

Example 6 was conducted in the same manner as in Example 1, except that a dense solid electrolyte layer having a 10Sc6CeSZ2Al composition was obtained as follows. Specifically, with a 10Sc6CeSZ composition represented by the general formula of 84 mol% (ZrO₂) -10 mol% (Sc₂O₃) -6 mol% (CeO₂), Al₂O₃ was mixed in an amount equivalent to 2 mol% relative to the total amount of substances (total molar amount) of the zirconia, the scandia, and the lanthanoid oxide and/or the yttria in the solid electrolyte material.

### (Example 7)

Example 7 was conducted in the same manner as in Example 1, except that a dense solid electrolyte layer having an 8Sc3CeSZ2Al composition was obtained as follows. Specifically, with an 8Sc3CeSZ composition represented by the general formula of 89 mol% (ZrO₂) -8 mop% (Sc₂O₃) -3 mol% (CeO₂), Al₂O₃ was mixed in an amount equivalent to 2 mol% relative to the total amount of substances (total molar amount) of the zirconia, the scandia, and the lanthanoid oxide and/or the yttria in the solid electrolyte material.

### (Example 8)

Example 8 was conducted in the same manner as in Example 1, except that a dense solid electrolyte layer having a 9Sc3CeSZ2Al composition was obtained as follows . Specifically, with a 9Sc3CeSZ composition represented by the general formula of 88 mol% (ZrO₂) -9 mol% (Sc₂O₃) -3 mol% (CeO₂), Al₂O₃ was mixed in an amount equivalent to 2 mol% relative to the total amount of substances (total molar amount) of the zirconia, the scandia, and the lanthanoid oxide and/or the yttria in the solid electrolyte material.

### (Example 9)

Example 9 was conducted in the same manner as in Example 1, except that a dense solid electrolyte layer having a 15Sc3CeSZ2Al composition was obtained as follows. Specifically, with a 15Sc3CeSZ composition represented by the general formula of 82 mol% (ZrO₂) -15 mol% (Sc₂O₃) -3 mol% (CeO₂), Al₂O₃ was mixed in an amount equivalent to 2 mol% relative to the total amount of substances (total molar amount) of the zirconia, the scandia, and the lanthanoid oxide and/or the yttria in the solid electrolyte material.

### (Example 10)

Example 10 was conducted in the same manner as in Example 1, except that a dense solid electrolyte layer having a 16Sc3CeSZ2Al composition was obtained as follows. Specifically, with a 16Sc3CeSZ composition represented by the general formula of 81 mol% (ZrO₂) -16 mol% (Sc₂O₃) -3 mol% (CeO₂), Al₂O₃ was mixed in an amount equivalent to 2 mol% relative to the total amount of substances (total molar amount) of the zirconia, the scandia, and the lanthanoid oxide and/or the yttria in the solid electrolyte material.

### (Comparative Example 1)

Comparative Example 1 was conducted in the same manner as in Example 1, except that a dense solid electrolyte layer was obtained by adding no Al₂O₃ to a 10Sc1CeSZ composition represented by the general formula of 89 mol% (ZrO₂) -10 mol% (Sc₂O₃) -1 mol% (CeO₂).

### (Comparative Example 2)

Comparative Example 2 was conducted in the same manner as in Example 1, except that a dense solid electrolyte layer was obtained by adding no Al₂O₃ to a 10ScSZ composition represented by the general formula of 90 mol% (ZrO₂) -10 mol% (Sc₂O₃).

### (Comparative Example 3)

Comparative Example 3 was conducted in the same manner as in Example 1, except that a dense solid electrolyte layer having a 10ScSZ1Al composition was obtained as follows. Specifically, to a 10ScSZ composition represented by the general formula of 90 mol% (ZrO₂) -10 mol% (Sc₂O₃), Al₂O₃ was added in an amount equivalent to 1 mol% relative to the total amount of substances (total molar amount) of the zirconia, the scandia, and the lanthanoid oxide and/or the yttria in the solid electrolyte material.

### (Testing Method)

Fig. 6 schematically shows a testing apparatus. A glass seal (SiO₂+B₂O₃) 104 was placed in an apparatus held by a zirconia tube 105, and the fabricated SOFC 100 was placed on the glass seal 104. Moreover, a zirconia tube 105 was placed on an upper surface of the SOFC 100. While the air was passed on the upper surface of the SOFC of each of Examples 1 to 10 and Comparative Examples 1 to 3, and 97% N₂+3% H₂ was passed on a lower surface thereof, the temperature of an electric furnace 106 was raised to 1000°C. While the air was passed on the upper surface of the SOFC, and a fuel gas (70% H₂+30% H₂O) was passed on the lower surface thereof, the temperature was kept at 1000°C for 600 hr. Then, while the air was passed on the upper surface of the SOFC, and 97% N₂+3% H₂ was passed on the lower surface thereof, the temperature was lowered to room temperature.

### (Analysis 1)

After the SOFC 100 was peeled off from the glass seal 104, a surface of the solid electrolyte layer 102 of the SOFC 100, the surface having been in contact with the glass seal, was analyzed by SEM and Raman spectroscopy, and the presence or absence of powder formation and the crystal phase were examined. In addition, the crystal phases of all the SOFCs were checked by Raman spectroscopy before the test.

The SEM observation was carried out by using S-4100 of Hitachi High-Technologies Co. , Japan at an acceleration voltage of 15 kV and at a 1000-fold magnification. In the Raman spectroscopy, mode of vibration of Zr-O on the surface of the electrolyte was analyzed by using NRS-2100 of JASCO Co. , Japan. The measurement was conducted with a detector equipped with a triple monochromator at a wavenumber resolution of 1 cm⁻¹ with an observation spot of 8 µm in diameter and an excitation wavelength of 523 nm.

**[Table 1]**

| | Composition | Initial stage Crystal phase | 600 hr later Powder formation | Crystal phase |
|---|---|---|---|---|
| Example 1 | 10Sc1CeSZ1Al | C | Absent | t |
| Example 2 | 10Sc1CeSZ2Al | C | Absent | t |
| Example 3 | 10Sc3CeSZ2Al | C | Absent | C |
| Example 4 | 10Sc3CeSZ5Al | C | Absent | C |
| Example 5 | 10Sc5CeSZ2Al | C | Absent | C |
| Example 6 | 10Sc6CeSZ2Al | C | Absent | t |
| Example 7 | 8Sc3CeSZ2Al | C+t | Absent | t |
| Example 8 | 9Sc3CeSZ2Al | C | Absent | C |
| Example 9 | 15Sc3CeSZ2Al | C | Absent | C |
| Example 10 | 16Sc3CeSZ2Al | C+r | Absent | C+r |
| Comp. Ex. 1 | 10Sc1CeSZ | C | Present | t |
| Comp. Ex. 2 | 10ScSZ | C+t | Present | t |
| Comp. Ex. 3 | 10ScSZ1Al | C | Present | t |

Table 1 shows the test results. The notation is as follows: c: cubic crystals, t: tetragonal crystals, and r: rhombohedral crystals. The powder formation was observed in each of Comparative Examples 1 to 3. In contrast, no powder formation was observed in any of Examples 1 to 10. This demonstrated that the powder formation can be suppressed by employing the composition of the present invention. In addition, the crystal phase was transformed to the t phase in each of Examples 1, 2 , 6, and 7 , and the r phase, which causes phase transformation at around 630°C, partially remained in Example 10 . In contrast, the crystal phase remained the c phase in each of Examples 3 , 4, 5, 8, and 9. From these results, more preferred compositions are those shown in Examples 3, 4, 5, 8, and 9, where 9 to 15 mol% of scandia and 2 to 5 mol% of a lanthanoid oxide were doped, and more than 1 mol% of alumina was further contained.

### (Analysis 2)

The SOFCs of Example 2 and 3 and Comparative Example 1 were analyzed as follows. Specifically, the fuel electrode layer 103 was peeled off, and the surface of the solid electrolyte layer 102 covered with the fuel electrode layer 103 was analyzed by SEM and Raman spectroscopy.

**[Table 2]**

| | Composition | Powder formation | Cracks | Crystal phase |
|---|---|---|---|---|
| Example 2 | 10Sc1CeSZ2Al | Absent | Absent | C |
| Example 3 | 10Sc3CeSZ2Al | Absent | Absent | C |
| Comp. Ex. 1 | 10Sc1CeSZ | Absent | Present | t |

Table 2 shows the results of the analysis. No powder formation was observed in the solid electrolyte layers covered with the fuel electrode layers. However, in Comparative Example 1, the crystal phase had already changed to the t phase, and cracks were observed at grain boundaries . On the other hand, in Examples 2 and 3, no powder formation was observed, the crystal phase was unchanged, and no cracks were observed at grain boundaries. In the case of Comparative Example 1, it is suggested that the powder formation may occur during a further long time operation, and the powder formation peeling may occur between the fuel electrode layer 103 and the solid electrolyte layer 102.

### Regarding Lanthanoid Oxides other than CeO₂, and Yttria (Example 11)

Example 11 was conducted in the same manner as in Example 1, except that a dense solid electrolyte layer having a 10Sc3SmSZ2Al composition was obtained as follows. Specifically, with a 10Sc3SmSZ composition represented by the general formula of 87 mol% (ZrO₂) -10 mol%- (Sc₂O₃) -3 mol% (Sm₂O₃), Al₂O₃ was mixed in an amount equivalent to 2 mol% relative to the total amount of substances (total molar amount) of the zirconia, the scandia, and the lanthanoid oxide and/or the yttria in the solid electrolyte material.

### (Example 12)

Example 12 was conducted in the same manner as in Example 1, except that a dense solid electrolyte layer having a 10Sc3YbSZ2Al composition was obtained as follows. Specifically, with a 10Sc3YbSZ composition represented by the general formula of 87 mol% (ZrO₂) -10 mol% (Sc₂O₃) -3 mol% (Yb₂O₃), Al₂O₃ was mixed in an amount equivalent to 2 mol% relative to the total amount of substances (total molar amount) of the zirconia, the scandia, and the lanthanoid oxide and/or the yttria in the solid electrolyte material.

### (Example 13)

Example 13 was conducted in the same manner as in Example 1, except that a dense solid electrolyte layer having a 10Sc3LaSZ2Al composition was obtained as follows. Specifically, with a 10Sc3LaSZ composition represented by the general formula of 87 mol% (ZrO₂) -10 mol% (Sc₂O₃) -3 mol% (La₂O₃), Al₂O₃ was mixed in an amount equivalent to 2 mol% relative to the total amount of substances (total molar amount) of the zirconia, the scandia, and the lanthanoid oxide and/or the yttria in the solid electrolyte material.

### (Example 14)

Example 14 was conducted in the same manner as in Example 1, except that a dense solid electrolyte layer having a 10Sc3YSZ2Al composition was obtained as follows. Specifically, with a 10Sc3YSZ composition represented by the general formula of 87 mol% (ZrO₂) -10 mol% (Sc₂O₃) -3 mol% (Y₂O₃), Al₂O₃ was mixed in an amount equivalent to 2 mol% relative to the total amount of substances (total molar amount) of the zirconia, the scandia, and the lanthanoid oxide and/or the yttria in the solid electrolyte material.

While the air was passed on the upper surface of the SOFC of each of Examples 11 to 14, and 97% N₂+3% H₂ was passed on a lower surface thereof by using the testing apparatus shown in Fig. 6, the temperature of the electric furnace 106 was raised to 1000°C. While the air was passed on the upper surface of the SOFC, and a fuel gas (70% H₂+30% H₂O) was passed on the lower surface thereof, the temperature was kept at 1000°C for 600 hr. Then, while the air was passed on the upper surface of the SOFC, and 97% N₂+3% H₂ was passed on the lower surface thereof, the temperature was lowered to room temperature. A surface of the solid electrolyte layer 102 of the SOFC 100, the surface having been in contact with the glass seal 104, was analyzed by SEM and Raman spectroscopy in the same manner, and the presence or absence of powder formation and the crystal phase were examined.

**[Table 3]**

| | Composition | Initial stage Crystal phase | 600 hr later Powder formation | Crystal phase |
|---|---|---|---|---|
| Example 3 | 10Sc3CeSZ2Al | C | Absent | C |
| Example 11 | 10Sc3SmSZ2Al | C | Absent | C |
| Example 12 | 10Sc3YbSZ2Al | C | Absent | C |
| Example 13 | 10Sc3LaSZ2Al | C | Absent | C |
| Example 14 | 10Sc3YSZ2Al | C | Absent | C |

Table 3 shows the results of the analysis after the test. No powder formation was observed in any of Examples 11 to 14, and the crystal phase remained the c phase therein. These results are the same as those of Example 3, indicating that the same effect as that achieved in the case where CeO₂ is doped can be achieved, also when a lanthanoid oxide other than CeO₂ or yttria is doped.

The electric conductivities of the solid electrolyte materials of Examples 3, 11, 12, 13, and 14 were measured. Each solid electrolyte material was press molded, and sintered at 1450°C for 5 hr. Then, platinum electrodes were attached onto both surfaces thereof, and a reference electrode was attached onto a side surface thereof. The impedance was measured at 1000°C under atmospheric atmosphere.

**[Table 4]**

| | Composition | Electric conductivity at 1000°C (S/cm) |
|---|---|---|
| Example 3 | 10Sc3CeSZ2Al | 0.28 |
| Example 11 | 10Sc3SmSZ2Al | 0.23 |
| Example 12 | 10Sc3YbSZ2Al | 0.22 |
| Example 13 | 10Sc3LaSZ2Al | 0.22 |
| Example 14 | 10Sc3YSZ2Al | 0.24 |

Table 4 shows the results of the electric conductivities. The electric conductivity of Example 3 was the highest, indicating that ceria is the most preferable as the doped lanthanoid oxide.

### Regarding Two-Layer Structure of Solid Electrolyte Layer (Example 15)

### (1) Fabrication of First Layer

A ZrO₂ raw material (average particle diameter 0.3 µm), a Sc₂O₃ raw material (average particle diameter 0.3 µm) were weighed to give a 10ScSZ composition represented by the general formula of 90 mol% (ZrO₂) -10 mol% (Sc₂O₃). These materials were wet blended in an ethanol solvent for 50 hr, and dried and ground. Then, the blend was sintered at 1200°C. The sintered material was ground into a powder. Then, 5 wt% of a binder PVA was added to the powder, followed by mixing in a mortar. The powder containing the PVA was press molded at 50 MPa. Thus, a molded article having a 10Sc1CeSZ1Al composition was fabricated.

### (2) Fabrication of Second Layer

A ZrO₂ raw material (average particle diameter 0.3 µm), a Sc₂O₃ raw material (average particle diameter 0.3 µm), and a CeO₂ raw material (average particle diameter 0.3 µm) were weighed to give a 10Sc3CeSZ composition represented by the general formula of 87 mol% (ZrO₂) -10 mol% (Sc₂O₃) -3 mol% (CeO₂). These materials were wet blended in an ethanol solvent for 50 hr, and dried and ground. Then, the blend was sintered at 1200 °C. The sintered material was ground into a powder. Then, to the powder, Al₂O₃ (average particle diameter: 0.5 µm) was added in an amount equivalent to 2 mol% relative to the total amount of substances (total molar amount) of the zirconia, the scandia, and the lanthanoid oxide and/or the yttria in the second layer, and 5 wt% of a binder PVA was added thereto, followed by mixing in a mortar. The powder containing the PVA was press molded at 50 MPa. Thus, a molded article having a 10Sc3CeSZ2Al composition was fabricated.

### (3) Fabrication of Cell

The molded article having the 10Sc1CeSZ1Al composition and serving as the first layer and the molded article having the 10Sc3CeSZ2Al composition and serving as the second layer were stacked on each other, thermally adhered to each other under pressure, and then sintered at 1450°C for 5 hr. The first layer was polished to a thickness of about 190 µm, and the second layer was polished to a thickness of about 10 µm. Then, a film of LSM (average particle diameter: 2 µm) was formed as an oxygen electrode layer on the surface of the first layer by screen printing so as to give a thickness of 20 µm after sintering, and a film of 40 wt% NiO-60 wt% YSZ (average particle diameter: 2 µm) was formed as a fuel electrode layer on the surface of the second layer by screen printing so as to form a cermet of Ni and YSZ and to give a thickness of 20 µm after sintering. Then, sintering was carried out at 1400°C for 2 hr.

### (Example 16; not according to the invention)

Example 16 was conducted in the same manner as in Example 15, except that the composition of the first layer was changed to one obtained by adding, to a 10Sc1CeSZ composition represented by the general formula of 89 mol% (ZrO₂) -10 mol% (Sc₂O₃) -1 mol% (CeO₂), Al₂O₃ (average particle diameter: 0.5 µm) in an amount equivalent to 1 mol% relative to the total amount of substances (total molar amount) of the zirconia, the scandia, and the lanthanoid oxide and/or the yttria in the first layer.

While the air was passed on the upper surface (on the first layer side) of the SOFC of each of Examples 15 and 16, and 97% N₂+3% H₂ was passed on the lower surface (on the second layer side) thereof by using the testing apparatus shown in Fig. 6, the temperature of the electric furnace 106 was raised to 1000°C. While the air was passed on the upper surface (on the first layer side) of the SOFC, and a fuel gas (70% H₂+30% H₂O was passed on the lower surface thereof, the temperature was kept at 1000°C for 600 hr. Then, while the air was passed on the upper surface (on the first layer side) of the SOFC, and 97% N₂+3% H₂ was passed on the lower surface thereof, the temperature was lowered to room temperature. After the SOFC 100 was peeled off from the glass seal 104, a surface of the solid electrolyte layer 102 of the SOFC 100, the surface having been in contact with the glass seal 104, was analyzed by SEM and Raman spectroscopy. Thus, the presence or absence of powder formation and the crystal phase were examined, and a comparison with Example 3 was made.

**[Table 5]**

| | Initial stage Crystal phase | 600 hr later Powder formation | Crystal phase |
|---|---|---|---|
| Example 3 | C | Absent | C |
| Example 15 | C | Absent | C |
| Example 16 | C | Absent | C |

Table 5 shows the results of the analysis after the test. No powder formation was observed in any of Examples 15 and 16, and the crystal phase remained the c phase therein. It was found that the powder formation and the crystal transformation were successfully suppressed by employing the electrolyte two-layer structure, in which the first layer had the composition of Comparative Example 1 or 2 and the second layer had the composition of Example 3.

The electric conductivities of the solid electrolyte materials of Examples 3, 15, and 16 were measured. Each solid electrolyte material was press molded and sintered at 1450°C for 5 hr. Platinum electrodes were attached onto both surfaces thereof, and a reference electrode was attached onto a side surface thereof. The impedance was measured at 1000°C under atmospheric atmosphere.

**[Table 6]**

| | Electric conductivity at 1000°C (S/cm) |
|---|---|
| Example 3 | 0.28 |
| Example 15 | 0.32 |
| Example 16 | 0.30 |

Table 6 shows the results of the electric conductivities. It was found that the provision of the layer having a high oxygen ion conductivity to the first layer resulted in a higher electric conductivity than that of Example 3, so that the electric power generation efficiency was increased. From these results, it has been found that it is more effective to form the second layer in a thickness minimum necessary for preventing the powder formation peeling.

### (Example 17)

Example 17 was conducted in the same manner as in Example 15, except that the composition of the first layer was changed to a 10YSZ composition to which no Al₂O₃ was added, and which is represented by the general formula of 90 mol% (ZrO₂) -10 mol% (Y₂O₃).

**[Table 7]**

| | Initial stage Crystal phase | 600 hr later Powder formation | Crystal phase |
|---|---|---|---|
| Example 3 | C | Absent | C |
| Example 17 | C | Absent | C |

Table 7 shows the results of the analysis after the test. No powder formation was observed in Example 17, either, and the crystal phase remained the c phase therein. It was found that the SOFC having the electrolyte two-layer structure and using yttria as the stabilizer of the first layer also achieved the same effect, when the second layer was formed of the solid electrolyte material of the present invention.

Effects of the present invention are described based on the SOFC of the type using the solid electrolyte layer as a support. However, the same effects are obtained also in SOFCs using an oxygen electrode layer or a fuel electrode layer as a support.

Regarding the design of the SOFC, the description is made based on the flat plate type. However, the same effects are obtained in the case of any type such as the flat tubular type, the tubular vertical-stripe type, and the microtube type.

In Examples shown above, the cases in each of which the ScSZ electrolyte material doped with only one lanthanoid oxide or yttria were tested. However, it is conceivable that the same effects as those in Examples shown above can be obtained also in a case where the ScSZ electrolyte material doped with a combination of two or more lanthanoid oxides or a combination of a lanthanoid oxide and yttria.

### Reference Signs List

- 100: SOFC
- 101: oxygen electrode layer
- 102: solid electrolyte layer
- 103: fuel electrode layer
- 104: glass seal (SiO₂+B₂O₃)
- 105: zirconia tube
- 106: electric furnace
- 107: solid electrolyte layer (first layer)
- 108: solid electrolyte layer (second layer)
- 110: 10Sc1CeSZ (cubic crystals)
- 111: 10Sc1CeSZ (tetragonal crystals)
- 112: alumina (Al₂O₃)

## Claims

1. A zirconia solid electrolyte material doped with scandia and also doped with a lanthanoid oxide and/or yttria, wherein
the zirconia solid electrolyte material further contains alumina,
the scandia doping is 9 to 15 mol% and the lanthanoid oxide and/or the yttria doping is 3 to 5 mol%, relative to the total molar amount of the zirconia, the scandia, and the lanthanoid oxide and/or the yttria in the solid electrolyte material.

2. The solid electrolyte material according to claim 1, containing more than 1 mol% of the alumina relative to the total molar amount of the zirconia, the scandia, sand the lanthanoid oxide and/or the yttria in the solid electrolyte material.

3. The solid electrolyte material according to claim 1, wherein
the lanthanoid oxide is ceria.

4. The solid electrolyte material according to claim 1, wherein
a crystal phase of the solid electrolyte material consists of cubic crystals.

## Patentansprüche

1. Festkörper-Elektrolytmaterial auf der Basis von Zirkoniumoxid, dotiert mit Skandiumoxid und ferner dotiert mit einem Lanthanoidoxid und/oder mit Yttriumoxid, wobei
das Festkörper-Elektrolytmaterial auf der Basis von Zirkoniumoxid ferner Aluminiumoxid aufweist,
die Dotierung mit Skandiumoxid in einem Bereich von 9-15 mol% liegt, wobei die Dotierung mit Lanthanoidoxid und/oder mit Yttriumoxid im Bereich von 3-5 mol% liegt, und zwar relativ gesehen zu der Gesamtmolmenge an Zirkoniumoxid, Skandiumoxid, Lanthanoidoxid und/oder Yttriumoxid in dem Festkörper-Elektrolytmaterial.

2. Festkörper-Elektrolytmaterial nach Anspruch 1, enthaltend mehr als 1 mol% von Aluminiumoxid, und zwar relativ zu der Gesamtmolmenge von Zirkoniumoxid, Skandiumoxid, Lanthanoidoxid und/oder Yttriumoxid in dem Festkörper-Elektrolytmaterial.

3. Festkörper-Elektrolytmaterial nach Anspruch 1, wobei das Lanthanoidoxid Ceriumoxid ist.

4. Festkörper-Elektrolytmaterial nach Anspruch 1, wobei eine kristalline Phase des Festkörper-Elektrolytmaterials aus kubischen Kristallen besteht.

## Revendications

1. Matériau électrolyte solide à base de zircone dopé avec de l'oxyde de scandium et également dopé avec un oxyde de lanthanide et/ou de l'oxyde d'yttrium, dans lequel
le matériau électrolyte solide à base de zircone contient également de l'alumine,
le dopage à l'oxyde de scandium est de 9 à 15 % en moles et le dopage à l'oxyde de lanthanide et/ou à l'oxyde d'yttrium est de 3 à 5 % en moles, par rapport à la quantité molaire totale de la zircone, de l'oxyde de scandium et de l'oxyde de lanthanide et/ou de l'oxyde d'yttrium dans le matériau électrolyte solide.

2. Matériau électrolyte solide selon la revendicaüon 1, contenant plus de 1 % en moles de l'alumine par rapport à la quantité molaire totale de la zircone, de l'oxyde de scandium et de l'oxyde de lanthanide et/ou de l'oxyde d'yttrium dans le matériau électrolyte solide.

3. Matériau électrolyte solide selon la revendication 1, dans lequel l'oxyde de lanthanide est l'oxyde de cérium.

4. Matériau électrolyte solide selon la revendication 1, dans lequel une phase cristalline du matériau électrolyte solide consiste en des cristaux cubiques.
